# DEMANDE DE BREVET EUROPEEN

(11) **EP 3 822 887 A1**
(43) Date de publication de la demande: **19.05.2021**
(21) Numéro de dépôt: 20208206.1
(22) Date de dépôt: 17.11.2020
(51) Int. Cl.: G06Q 10/06, G06Q 50/02, H04W 4/021

(54) **PROCÉDÉ ET SYSTÈME POUR FOURNIR DES INFORMATIONS DE TRAÇABILITÉ POUR DES PRODUCTIONS VÉGÉTALES, ET ÉQUIPEMENT PORTABLE EMBARQUÉ POUR L IMPLÉMENTATION DE CE PROCÉDÉ**

(30) Priorité: 18.11.2019 FR 1912825
(71) Demandeur: Ortix, 78180 Montigny-le-Bretonneux (FR)
(72) Inventeur: RUCHOT, Olivier, 78990 ELANCOURT (FR)
(74) Mandataire: IP Trust

(57) **Abrégé**

Procédé pour fournir des informations de traçabilité pour des productions végétales, mettant en œuvre un engin motorisé (2.1,2.2,2.3,2.4) équipé d'un ou plusieurs outils agricoles interchangeables (4.1,4.2,4.3), pour réaliser une activité spécifique sur une parcelle de terrain (8.1,8.2).

Ce procédé comprend des étapes de géolocalisation en temps réel de l'engin motorisé (2.1,2.2,2.3,2.4), d'identification du ou des outils agricoles (2.1,2.2,2.3,2.4) équipant l'engin motorisé, de mesure en temps réel d'au moins une grandeur physique représentative du comportement mécanique et/ou de la configuration spatiale de l'engin motorisé et/ou de l'outil de façon à caractériser les conditions d'utilisation de cet outil, de traitement des mesures de géolocalisation, d'identification du ou des outils et de la grandeur physique, de façon à fournir des informations de traçabilité sur l'activité agricole en cours, et d'enregistrement des informations de traçabilité dans une base de suivi d'activités.

## Description

### DOMAINE DE L'INVENTION

La présente invention concerne un procédé pour fournir des informations de traçabilité pour des productions végétales. Elle vise également un système pour fournir des informations de traçabilité mettant en œuvre ce procédé, ainsi qu'un équipement portable embarqué pour l'implémentation de ce procédé.

Le domaine de l'invention est celui de l'agriculture, et plus particulièrement celui des productions végétales.

### ARRIERE-PLAN TECHNOLOGIQUE

Il existe une demande sans cesse croissante pour fournir des informations de traçabilité en agriculture, et en particulier pour les productions végétales. Les parties prenantes, - consommateurs, associations environnementales, pouvoirs publics, autorités sanitaires, organisations professionnelles - sont particulièrement intéressées par ces informations de traçabilité qui sont également une ressource essentielle pour les exploitants agricoles afin d'optimiser la gestion de leurs parcelles et d'améliorer la rentabilité de leurs activités tout en respectant les normes et réglementations.

A ce jour, des offres de systèmes de traçabilité d'activités agricoles sont déjà disponibles sur le marché. Toutefois, elles présentent pour les opérateurs plusieurs limitations et inconvénients, au nombre desquels l'utilisation d'interfaces homme-machine sollicitant trop fortement les opérateurs agricoles, et pour certaines offres la nécessité de séquences de saisie fastidieuses à l'issue des activités agricoles.

Le document US 2016/0314542 A1 divulgue ainsi un procédé de détermination automatique d'une activité agricole, comprenant une détection d'un événement déclenchant, un ensemble de mesures obtenues par capteur et registrées sur une période de traitement, une identification d'un traitement antérieur basée sur les mesures du capteur et une identification de la parcelle de terrain.

Le document US 8,534,545 B2 divulgue un système de traçabilité des cultures comprenant un terminal qui se déplace avec une machine pour récolter ou transporter une production végétale; et un serveur qui reçoit une information du terminal. Ce terminal comprend une unité d'acquisition d'informations de géolocalisation qui acquiert une information de géolocalisation du terminal. Le serveur comprend une unité de stockage qui stocke une information de localisation d'une caractéristique planimétrique, un récepteur qui reçoit les informations de localisation et l'identifiant d'ordinateur qui sont transmis par le terminal, et un processeur d'informations d'identité qui relie l'identifiant machine à un identifiant de la caractéristique planimétrique lorsqu'une information de localisation de la caractéristique planimétrique stockée dans l'unité de stockage coïncide avec les informations de géolocalisation transmises par le terminal.

Le document US 2016/0283887 A1 divulgue un système pour surveiller des activités agricoles par ordinateur, comprenant une pluralité de capteurs pour détecter une activité agricole et des paramètres d'environnement.

Le document CN 102496071 B divulgue un système de traçabilité d'informations de production agricole, comprenant des moyens de collecte d'informations, un appareil de traitement d'informations émetteur/récepteur et un appareil d'affichage d'informations. Le dispositif est un moyen de collecte d'informations portable pour collecter des opérations agricoles, les mouvements du corps de l'opérateur, l'outil d'opération et les informations de cible d'opération, et il transmet les informations à l'appareil de traitement d'informations émetteur. L'appareil de traitement d'informations analyse les informations reçues et transmet le résultat d'analyse à l'appareil d'affichage d'informations.

Le document US 2016/0275580 A1 divulgue un système informatisé pour suivre et optimiser la productivité d'une activité agricole, procurant le suivi d'un produit agricole de l'origine à l'expédition au marché, et analysant les données compilées et en modifiant les activités futures en conséquence. Un référentiel de données source unique conserve des enregistrements de données agricoles, administratives et environnementales associées au produit agricole.

Le but de la présente invention est de proposer un nouveau concept de génération et de fourniture d'informations de traçabilité, qui soit d'utilisation la plus simple et la moins intrusive possible pour les opérateurs et qui puisse contribuer à une réelle optimisation de la gestion des activités agricoles sur des parcelles de terrain.

### RESUME DE L'INVENTION

Cet objectif est atteint avec un procédé pour fournir des informations de traçabilité pour des productions végétales, lors de la réalisation d'une activité mécanisée sur une parcelle de terrain mettant en œuvre un engin agricole motorisé conduit par un opérateur et pourvu d'un équipement communicant avec un site distant de traitement d'informations et de génération d'informations de traçabilité, ledit équipement étant pourvu d'interfaces de saisie et d'affichage, ce procédé comprenant les étapes suivantes :
- géolocalisation en temps réel de l'engin agricole motorisé,
- identification de l'engin agricole motorisé,
- mesure en temps réel d'au moins une grandeur physique représentative du comportement mécanique dudit engin agricole motorisé,
- traitement des mesures de géolocalisation et de la au moins une grandeur physique, et de données d'identification de l'engin agricole motorisé, de façon à fournir des informations de traçabilité sur l'activité agricole en cours, et
- enregistrement desdites informations de traçabilité dans une base de données de traçabilité.

Suivant l'invention, ce procédé comprend en outre les étapes suivantes :
- identification d'un ou plusieurs outils agricoles interchangeables équipant l'engin agricole motorisé,
- détermination automatique de la nature de l'activité mécanisée engagée, à partir de l'identification du ou desdits outils agricoles et des mesures d'au moins une grandeur physique,
- requête, contextualisée à l'activité en cours, pour saisir, à partir de ladite interface de saisie, des informations associées à l'activité engagée sur la parcelle, ladite requête contextualisée exploitant des informations de traçabilité en relation avec ladite parcelle.

Le procédé selon l'invention peut en outre avantageusement comprendre une étape, contextualisée à l'activité en cours, pour saisir des informations sur les intrants et/ou la production obtenue sur la parcelle, ladite saisie contextualisée exploitant des informations de traçabilité en relation avec ladite parcelle. Cette étape de saisie contextualisée peut intervenir au démarrage d'une activité.

Ainsi, à la différence de l'art antérieur et en particulier du document US 2016/0314542 A1, les étapes d'identification, de détermination de la nature d'activité et de requête de saisie sont réalisées *pendant* l'activité mécanisée en cours et non à l'issue de cette activité. Il devient alors possible de procurer aux opérateurs en cours d'activité des informations pertinentes, notamment des alertes, qui leur permettent d'optimiser leurs activités et de respecter des dispositions réglementaires.

Le procédé selon l'invention, peut en outre comprendre une étape pour analyser des informations saisies par rapport à un historique de traçabilité relatif à la parcelle et à un ensemble de règles régissant l'utilisation d'intrants, et une remontée auprès de l'exploitant d'éventuelles informations d'alerte sur des anomalies d'utilisation d'intrants, ainsi qu'une étape pour transmettre à l'opérateur des informations relatives à l'activité qu'il engage, en réponse à des informations de traçabilité collectées en temps réel sur une parcelle de terrain.

On peut également prévoir un processus d'apprentissage sur les mesures de traçabilité de l'activité.

L'étape d'identification de l'outil agricole peut mettre en œuvre une technique de reconnaissance d'image ou une balise radio-émettrice.

L'étape de mesure d'une grandeur physique peut comprendre une mesure de vibration réalisée en un point du tracteur et/ou de l'outil agricole. Cette mesure de vibration peut mettre en œuvre un accéléromètre implanté sur l'outil agricole et/ou l'engin motorisé.

Dans un mode particulier de mise en œuvre de l'invention, le procédé peut en outre comprendre une étape pour détecter la proximité d'un équipement d'intérêt pour l'engin motorisé et/ou l'activité en cours. Cet équipement d'intérêt peut être par exemple une station de fourniture de carburant.

En réponse à une détection de proximité d'une station de fourniture de carburant, on peut prévoir une étape pour transmettre à l'opérateur du tracteur une requête de saisie contextualisée relative à un besoin éventuel de fournir le tracteur en carburant et au vu de l'historique d'utilisation de l'engin motorisé et des pleins de carburant déjà effectués, ainsi qu'une estimation de la consommation moyenne. Cette estimation peut reposer sur un processus d'apprentissage sur la consommation en carburant de l'engin motorisé par apport à une nature d'activité.

L'étape de détection de proximité peut notamment mettre en œuvre une balise fixée sur la station de fourniture de carburant et/ou sur l'équipement d'intérêt.

Suivant un autre aspect de l'invention, il est proposé un système pour fournir des informations de traçabilité pour des productions végétales, mettant en œuvre un engin agricole motorisé pour réaliser une activité spécifique sur une parcelle de terrain, cet engin agricole motorisé étant conduit par un opérateur et pourvu d'un équipement communicant avec un site distant de traitement d'informations et de génération d'informations de traçabilité, ledit équipement étant pourvu d'interfaces de saisie et d'affichage, mettant en œuvre le procédé selon l'invention, ce système comprenant :
- des moyens pour géolocaliser en temps réel ledit engin agricole motorisé,
- des moyens pour mesurer en temps réel au moins une grandeur physique représentative du comportement mécanique dudit engin motorisé,
- des moyens pour traiter les mesures de géolocalisation et de la au moins une grandeur physique, de façon à fournir des informations de traçabilité sur l'activité agricole en cours, et
- des moyens pour enregistrer lesdites informations de traçabilité dans une base de données de traçabilité.

Suivant l'invention, le système comprend en outre :
- des moyens pour identifier un ou plusieurs outils agricoles interchangeables équipant l'engin agricole motorisé,
- des moyens pour déterminer automatiquement la nature de l'activité mécanisée engagée et de la parcelle sur laquelle elle se déroule, à partir de l'identification dudit engin agricole motorisé et des mesures d'au moins une grandeur physique, et
- des moyens pour inviter l'opérateur à saisir, à partir de ladite interface de saisie, des informations sur l'activité engagée sur la parcelle.

Le système selon l'invention peut en outre comprendre des moyens pour accéder à des informations de traçabilité de productions agricoles antérieures sur la parcelle en exploitation et/ou avec l'outil agricole en utilisation, ainsi que des moyens pour transférer les données de géolocalisation et les mesures de grandeur physique vers un site distant de traitement de données.

On peut aussi prévoir que le système selon l'invention comprenne en outre des moyens pour émettre une requête d'information auprès d'un opérateur de l'engin motorisé, des moyens pour collecter des informations émises par ledit opérateur en réponse à ladite requête, des moyens pour transférer lesdites informations collectées dans la base de données de traçabilité, et des moyens pour transmettre à l'opérateur des informations relatives à un ou plusieurs traitements phytosanitaires et/ou d'engrais en réponse à des informations de traçabilité collectées en temps réel sur une parcelle de terrain.

Dans un mode particulier de réalisation, le système selon l'invention peut en outre comprendre des moyens d'apprentissage exploitant une pluralité d'informations de traçabilité de production agricoles obtenues sur une même parcelle de terrain, de façon à fournir des informations de recommandation pour un traitement phytosanitaire et/ou pour un épandage d'engrais sur ladite parcelle de terrain.

Les moyens d'identification de l'outil agricole peuvent comprendre une balise radio-émettrice installée sur l'outil agricole, et les moyens de mesure d'une grandeur physique peuvent comprendre des moyens pour mesurer une vibration réalisée en un point de l'engin motorisé et/ou de l'outil agricole, ou des moyens de mesure d'inclinaison de l'outil, notamment du type accéléromètre ou gravitomètre.
Ces moyens de mesure de vibration peuvent comprendre un accéléromètre implanté sur l'outil agricole. Ils contribuent à caractériser les conditions effectives d'utilisation de l'outil agricole.

On peut aussi prévoir que le système selon l'invention comprenne en outre des moyens pour détecter la proximité d'un équipement d'intérêt, notamment d'une station de fourniture de carburant, des moyens pour transmettre à l'opérateur de l'engin motorisé, en réponse à une détection de proximité d'une station de fourniture de carburant, une requête relative à un besoin éventuel de fournir le tracteur en carburant. Les moyens de détection de proximité peuvent comprendre une balise fixée sur la station de fourniture de carburant et/ou sur l'équipement d'intérêt.

Suivant encore un autre aspect de l'invention, il est proposé un équipement portable embarqué dans un engin motorisé équipé d'un ou plusieurs outils agricoles interchangeables, prévu pour l'implémentation du procédé pour fournir des informations de traçabilité pour des productions végétales selon l'invention, comprenant des moyens pour géolocaliser en temps réel ledit engin motorisé, des moyens pour recevoir des données d'identification du et des outils agricoles équipant ledit engin motorisé, des moyens pour recevoir des mesures d'au moins une grandeur physique représentative du comportement mécanique et/ou de la configuration spatiale dudit engin motorisé et/ou dudit ou desdits outils agricoles, des moyens d'interface pour inviter l'opérateur à saisir des informations d'intérêt pour l'activité, et des moyens pour communiquer avec un site distant de traitement d'informations et de génération d'informations de traçabilité.

### BREVE DESCRIPTION DES FIGURES

On comprendra mieux l'invention en se référant aux figures ci-après :
- La figure 1 est un schéma synoptique d'un exemple de réalisation d'un système de fourniture d'informations de traçabilité selon l'invention ;
- La figure 2 illustre sous la forme d'un organigramme un exemple de mise en œuvre du procédé de fourniture d'informations de traçabilité selon l'invention ;
- Les figures 3 à 14 représentent des exemples de pages-écrans visualisées sur son équipement portable embarqué par un opérateur exploitant le procédé de fourniture d'informations de traçabilité selon l'invention.

### DESCRIPTION DETAILLEE D'UN EXEMPLE DE REALISATION

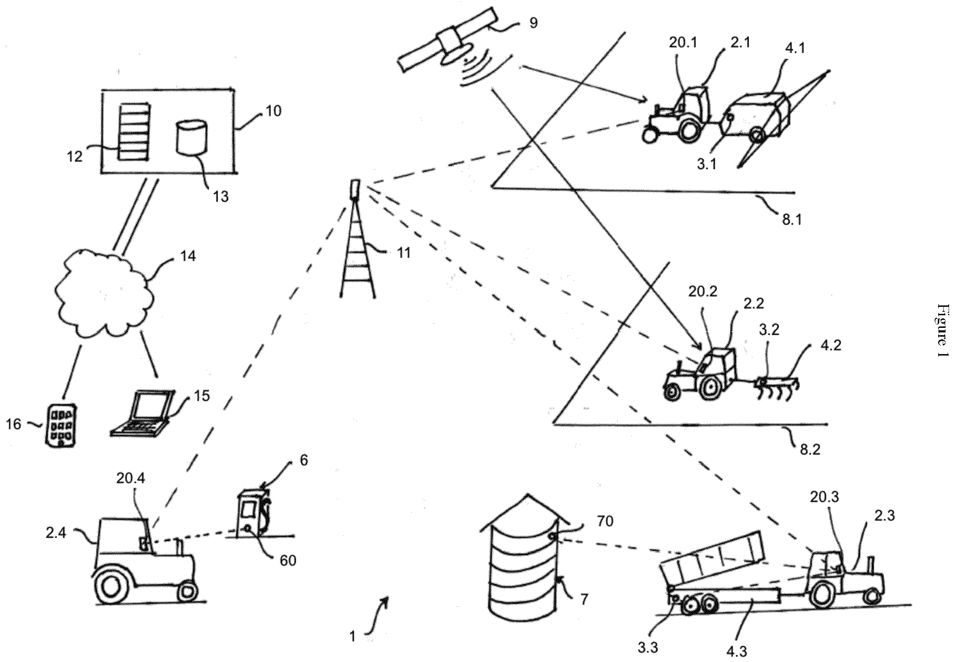

On va maintenant décrire, en référence à la figure 1, un exemple de réalisation d'un système 1 de fourniture d'informations de traçabilité selon l'invention. Le système 1 comporte des équipements portables de type « Tracker » 20.1,20.2,20.3,20.4 embarqué dans des engins motorisés ou tracteurs 2.1,2.2,2.3,2.4 tractant des équipements ou outils agricoles 4.1,4.2,4.3, - par exemple un pulvérisateur 4.12, une charrue 4.2 ou une remorque 4.3, et un site distant 10 pourvu d'une antenne de radiocommunication 11, d'un poste informatique 12 et d'une unité de stockage 13 contenant une base de données de traçabilité. Ce site distant 10 est relié à un cloud (ou « nuage ») 14 auxquels peuvent être connectés des smartphones 16 et des ordinateurs portables 15.

Les équipements ou outils agricoles 4.1,4.2,4.3 sont reliés mécaniquement aux tracteurs 2.1,2.2,2.3 et comportent chacun une balise 3.1,3.2,3.3 détectable par les équipements portables de type Tracker 20.1,20.2,20.3,20.4 embarqués dans les tracteurs 2.1,2.2,2.3,2.4.

Chaque équipement portable embarqué 20.1,20.2,20.3,20.4 comprend un module de géolocalisation par satellite 9 et transmet au poste informatique 12 du site distant 10 via l'antenne 11 des informations de géolocalisation des tracteurs 2.1,2.2,2.3,2.4 dans une parcelle de terrain 8.1,8.2 et des informations de mesure de grandeur physique issues de capteurs (non représentés) équipant les outils agricoles 4.1,4.2,4.3.

Le système 1 de fourniture d'informations de traçabilité selon l'invention peut aussi couvrir des équipements d'intérêt pour un exploitant agricole, par exemple une station 6 de fourniture de carburant équipée d'une balise 60 ou un silo ou site de stockage 7 lui aussi équipé d'une balise radio 70.

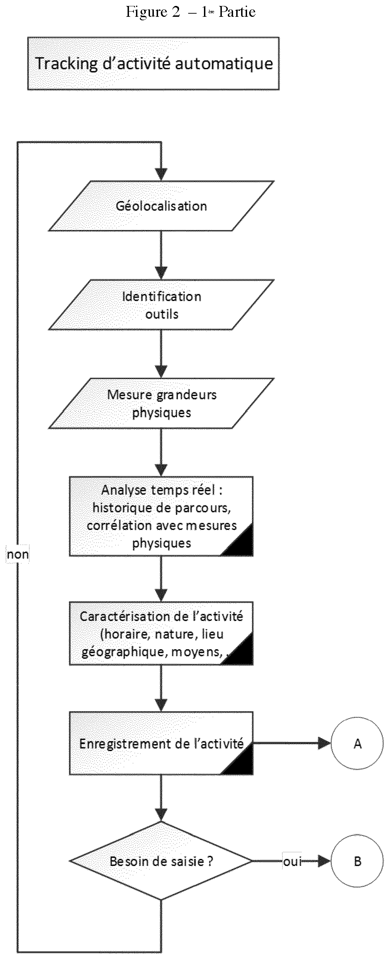

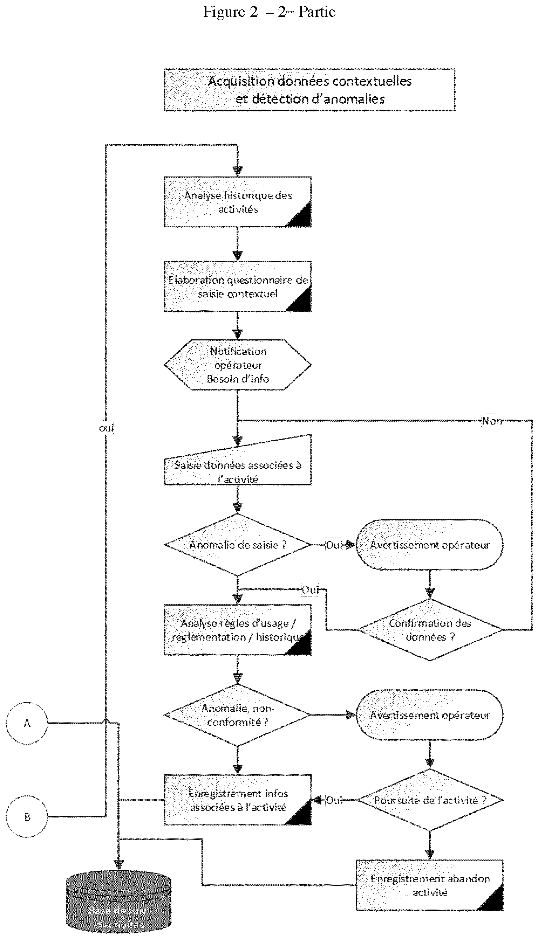

En référence à la figure 2, le procédé de fourniture d'informations de traçabilité selon l'invention comprend deux processus pouvant être exécutés à la fois sur le site de traitement distant et sur les équipements embarqués.

Un premier processus correspond à un tracking (traçabilité) d'activité automatique tandis que le second processus vise une acquisition de données contextuelles et une détection d'anomalies.

Le processus de tracking comprend une géolocalisation du tracteur 2.1,2.2 dans son territoire d'activité et notamment dans la parcelle de terrain 8.1,8.2, une identification de l'outil agricole 4.1,4.2 connecté au tracteur 2.1,2.2, une mesure de grandeurs physiques telles qu'une accélération ou un signal acoustique, une analyse en temps réel de ces grandeurs mesurées pour en extraire un historique de parcours et une corrélation avec d'autres mesures physiques, une caractérisation de l'activité (horaire, nature, lieu géographique, moyens techniques mis en œuvre. Cette caractérisation de l'activité fait l'objet d'en enregistrement automatique dans la base de données 13 qui fait fonction de base de suivi d'activité.

Ce processus de tracking est exécuté en boucle fermée et de manière permanente. Un besoin de saisie initie alors le processus d'acquisition de données contextuelles et de détection d'anomalie.
Ce processus inclut une analyse historique des activités qui ont été réalisées sur la parcelle de terrain concernée 8.1,8.2, une élaboration d'un questionnaire de saisie contextuel, une notification à l'opérateur d'un besoin d'information implémentée sous la forme d'un affichage d'un message de demande de saisie sur l'écran de l'équipement portable embarqué 20.1,20.2 et une saisie des données associées à l'activité.

Une détection d'anomalie est alors réalisée sur les données saisies. Si une anomalie est détectée, l'opérateur en est averti. Une confirmation des données lui est demandée. Si l'opérateur ne les confirme pas, on lui demande alors de saisir à nouveau les données associées à l'activité. S'il les confirme ou si aucune anomalie n'a été détectée, une analyse des règles d'usage, de la réglementation et de l'historique est réalisée.

A l'issue de cette analyse de conformité, une détection d'anomalie pour non-conformité est effectuée. En cas de détection de non-conformité, l'opérateur en est averti et il lui est demandé s'il décide de poursuivre l'activité. En cas de poursuite, les informations associées à l'activité sont enregistrées. Dans le cas contraire, c'est l'information d'abandon d'activité qui est enregistrée dans la base de suivi d'activité.

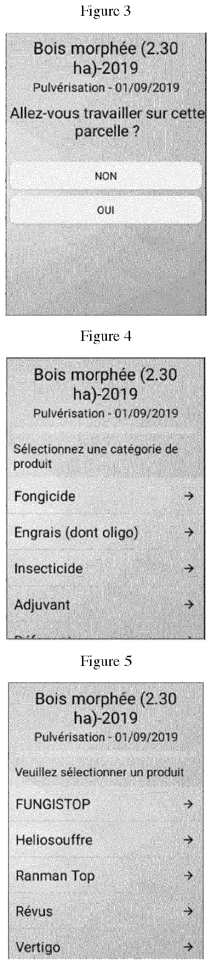

On va maintenant décrire, en référence aux figures 3 à 13, des exemples caractéristiques de pages-écrans visualisées sur l'équipement portable embarqué 20.1,20.2 utilisé par l'opérateur dans la cabine de son tracteur 2.1,2.2.

Suite à la détection d'une activité nécessitant une saisie, provenant de l'analyse des données de tracking, l'opérateur reçoit une page, en référence à la figure 3, qui lui demande s'il va travailler sur cette parcelle. Après avoir répondu oui, l'opérateur reçoit alors une page correspondant à l'activité « Pulvérisation », représentée en figure 4, qui liste une catégorie de produits de pulvérisation déjà utilisés sur cette parcelle.

L'opérateur sélectionne alors la catégorie « Fongicide » et le système 1 émet en réponse une page listant une série de produits fongicides en demandant à l'opérateur de sélectionner un produit, en référence à la figure 5.

Une liste réduite de produits utilisables est proposée à l'opérateur dans le contexte de l'activité en cours (activité, stade de croissance,...). Cette liste réduite facilite le choix par l'opérateur et permet à l'opérateur de se rendre compte d'une éventuelle erreur dans le choix de ses produits.

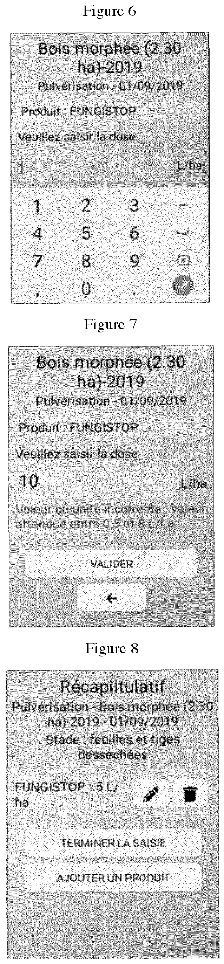

L'opérateur ayant sélectionné le produit « Fungistop® », le système 1 émet en retour une page lui demandant de saisir la dose de ce produit qu'il envisage d'utiliser sur cette parcelle (figure 6).

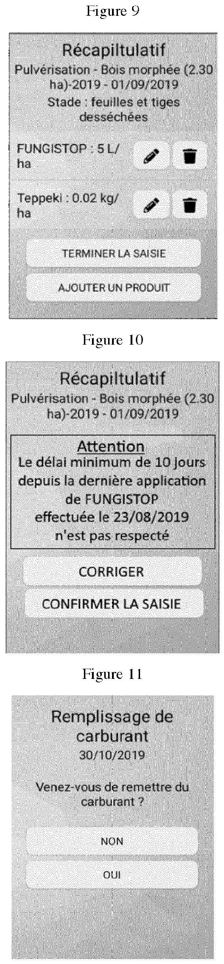

En réponse à une saisie par l'opérateur d'une dose de 10 L/ha, le système 1 lui retourne un message de détection d'anomalie lui indiquant qu'une valeur de dosage attendue doit être comprise entre 0.5 et 8 L/ha, en référence à la figure 7. L'opérateur est alors invité à corriger son objectif de dosage du fongicide, ce qu'il fait en indiquant désormais une dose de 5L/ha comprise dans la gamme attendue. Il reçoit en retour un récapitulatif (figure 8) de l'activité qu'il envisage de réaliser sur la parcelle « Bois morphée » et il est invité soit à terminer la saisie, soit à ajouter un produit. Si l'opérateur décide d'ajouter un produit et effectue les saisies correspondantes (catégorie, nom du produit, dose), il recevra alors un nouveau récapitulatif (figure 9) mentionnant désormais les deux produits que l'opérateur prévoit de pulvériser.

Après validation des produits préparés, un contrôle est effectué vis-à-vis de l'historique de traçabilité et des règles d'utilisation des produits. La figure 10 illustre un message d'avertissement porté à la connaissance de l'opérateur sur le non-respect d'une règle de délai entre deux applications d'un produit sur le type de culture considéré.

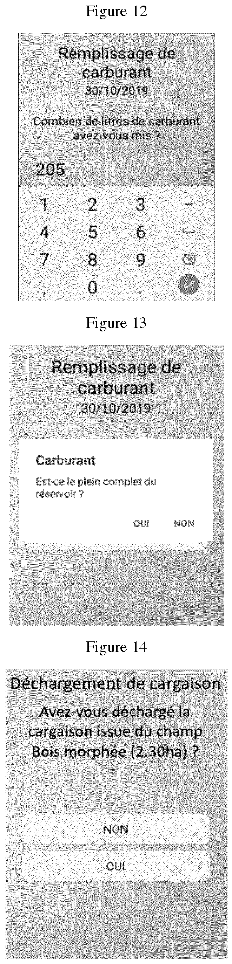

Si un opérateur, après avoir réalisé les activités de pulvérisation sur une parcelle, passe avec son tracteur 2.4 à proximité d'une station-service 6 équipée d'une balise d'identification 60, cet opérateur va recevoir sur l'écran de son équipement portable embarqué 20.4 une page l'incitant à refaire le plein de carburant pour son tracteur 2.4, comme l'illustre la figure 10. Si l'opérateur répond par l'affirmative et effectue le remplissage du réservoir de carburant du tracteur 2.4, il recevra en réponse une nouvelle page (figure 11) l'invitant à indiquer le nombre de litres de carburant qu'il a mis dans ce réservoir. Après avoir saisi ce nombre de litres, il recevra en retour (figure 12) une nouvelle page l'invitant à indiquer s'il s'agissait du plein complet du réservoir. Ces informations relatives aux opérations de remplissage de carburant seront stockées dans la base de suivi d'activité 13.

Enfin, si l'opérateur s'arrête à proximité d'un silo 7 avec une remorque 4.3 attelée à son tracteur 2.3, le procédé détecte s'il provient d'une parcelle qui est en cours de récolte ou qui vient d'être récoltée, et automatiquement propose d'enregistrer la décharge de la récolte, avec l'identification de la parcelle. La nature de la production déchargée est automatiquement affichée sur l'équipement portable 20.3.

En référence à la figure 14, si cet opérateur s'arrête avec son tracteur 2.3 à proximité du silo 7 équipé de la balise 70, il recevra alors une séquence de pages spécifiquement dédiée aux opérations de déchargement et de saisie du poids de cargaison livrée qu'il pourra réaliser sur le site de ce silo 7.

Si l'opérateur entre dans une nouvelle parcelle avec le même outil, par exemple le même pulvérisateur, et que c'est la même culture, un message apparaît « Allez-vous utiliser le même produit que pour la parcelle précédente ? ». C'est rendu possible par le croisement entre les informations de géolocalisation et les données de suivi d'activité.

Bien sûr, la présente invention n'est pas limitée aux exemples de réalisation qui viennent d'être décrits. En particulier, on peut envisager, sans sortir du cadre de la présente invention, de nombreuses configurations d'engins motorisés et d'outils agricoles, avec divers niveaux d'intégration de ces outils. Par ailleurs, le système de fourniture d'informations de traçabilité selon l'invention peut être déployé dans de nombreuses configurations d'exploitation agricole, sur un nombre variable de parcelles et avec une diversité de sites d'intérêt équipés de balises d'identification.

## Revendications

1. Procédé pour fournir des informations de traçabilité pour des productions végétales, lors de la réalisation d'une activité mécanisée sur une parcelle de terrain (8.1,8.2) mettant en œuvre un engin agricole motorisé (2.1,2.2,2.3,2.4) conduit par un opérateur et pourvu d'un équipement (20) communicant avec un site distant (10) de traitement d'informations et de génération d'informations de traçabilité, ledit équipement (20) étant pourvu d'interfaces de saisie et d'affichage,
comprenant les étapes suivantes :
- géolocalisation en temps réel de l'engin agricole motorisé (2.1,2.2,2.3,2.4),
- identification de l'engin agricole motorisé (2.1,2.2,2.3),
- mesure en temps réel d'au moins une grandeur physique représentative du comportement mécanique dudit engin agricole motorisé (2.1,2.2,2.3,2.4),
- traitement des mesures de géolocalisation et de la au moins une grandeur physique, et de données d'identification de l'engin agricole motorisé, de façon à fournir des informations de traçabilité sur l'activité agricole en cours, et
- enregistrement desdites informations de traçabilité dans une base de données de traçabilité (13),
**caractérisé en ce qu'**il comprend en outre les étapes suivantes :
- identification d'un ou plusieurs outils agricoles interchangeables (4.1,4.2,4.3) équipant l'engin agricole motorisé,
- détermination automatique de la nature de l'activité mécanisée engagée, à partir de l'identification du ou desdits outils agricoles et des mesures d'au moins une grandeur physique,
- requête, contextualisée à l'activité en cours, pour saisir, à partir de ladite interface de saisie, des informations associées à l'activité engagée sur la parcelle (8.1,8.2), ladite requête contextualisée exploitant des informations de traçabilité en relation avec ladite parcelle (8.1,8.2).

2. Procédé selon la revendication 1, **caractérisé en ce qu'**il comprend en outre les étapes d':
- analyse des informations saisies par rapport à un historique de traçabilité relatif à ladite parcelle (8.1,8.2), et génération d'informations d'alerte en cas de détection d'anomalie sur les informations d'activité saisies et analysées, et
- affichage sur ladite interface d'affichage desdites informations d'alerte.

3. Procédé selon l'une des revendications précédentes, **caractérisé en ce que** l'étape d'invitation contextualisée comprend en outre une étape, contextualisée à l'activité en cours, pour inviter l'opérateur à saisir des informations sur les intrants et/ou la production obtenue sur la parcelle (8.1,8.2), ladite requête contextualisée exploitant des informations de traçabilité en relation avec ladite parcelle (8.1,8.2).

4. Procédé selon la revendication 3, **caractérisé en ce qu'**il comprend en outre une étape pour analyser des informations saisies par rapport à un historique de traçabilité relatif à ladite parcelle (8.1,8.2) et à un ensemble de règles régissant l'utilisation d'intrants, et une remontée auprès de l'exploitant, dans l'instant suivant la saisie, d'éventuelles d'informations d'alerte sur des anomalies d'utilisation d'intrants.

5. Procédé selon l'une quelconque des revendications précédentes, **caractérisé en ce que** la saisie contextualisée intervient au démarrage d'une activité.

6. Procédé selon l'une quelconque des revendications précédentes, **caractérisé en ce qu'**il comprend en outre un processus d'apprentissage sur les mesures de traçabilité de l'activité.

7. Procédé selon l'une quelconque des revendications précédentes, **caractérisé en ce que** l'étape d'identification de l'outil agricole (4.1,4.2,4.3) met en œuvre une balise radio-émettrice (3.1,3.2,3.3).

8. Procédé selon l'une quelconque des revendications précédentes, **caractérisé en ce qu'**il comprend en outre une étape pour détecter l'arrêt à proximité d'un équipement d'intérêt (6,7) ou dans une zone d'intérêt pour l'engin motorisé (2.1,2.2,2.3,2.4) et/ou l'activité en cours.

9. Système (1) pour fournir des informations de traçabilité pour des productions végétales, mettant en œuvre un engin agricole motorisé (2.1,2.2,2.3,2.4) pour réaliser une activité spécifique sur une parcelle de terrain (8.1,8.2), cet engin agricole motorisé étant conduit par un opérateur et pourvu d'un équipement (20) communicant avec un site distant (10) de traitement d'informations et de génération d'informations de traçabilité, ledit équipement (20) étant pourvu d'interfaces de saisie et d'affichage, mettant en œuvre le procédé selon l'une quelconque des revendications précédentes, ce système comprenant
- des moyens (9,20.1,20.2,20.3,20.4) pour géolocaliser en temps réel ledit engin agricole motorisé (2.1,2.2,2.3,2.4),
- des moyens pour mesurer en temps réel au moins une grandeur physique représentative du comportement mécanique dudit engin motorisé (2.1,2.2,2.3,2.4),
- des moyens (12) pour traiter les mesures de géolocalisation, d'identification de la au moins une grandeur physique, de façon à fournir des informations de traçabilité sur l'activité agricole en cours, et
- des moyens (12) pour enregistrer lesdites informations de traçabilité dans une base de données de traçabilité (13),
**caractérisé en ce qu'**il comprend en outre :
- des moyens pour identificr un ou plusieurs outils agricoles interchangeables (4.1,4.2,4.3) équipant l'engin agricole motorisé (2.1,2.2,2.3,2.4),
- des moyens pour déterminer automatiquement la nature de l'activité mécanisée engagée, à partir de l'identification dudit ou desdits outils agricoles (4.1,4.2,4.3) et des mesures d'au moins une grandeur physique, et
- des moyens pour inviter l'opérateur à saisir, à partir de ladite interface de saisie, des informations sur l'activité engagée sur la parcelle (8.1,8.2).

10. Système selon la revendication précédente, **caractérisé en ce qu'**il comprend en outre :
- des moyens pour analyser les informations saisies par rapport à un historique de traçabilité relatif à ladite parcelle (8.1,8.2) et pour générer des informations d'alerte en cas de détection d'anomalie sur les informations d'activité saisies et analysées, et
- des moyens pour afficher sur ladite interface d'affichage lesdites informations d'alerte.

11. Système (1) selon l'une des revendications 9 ou 10, **caractérisé en ce qu'**il comprend en outre des moyens d'apprentissage exploitant une pluralité d'informations de traçabilité de production agricoles obtenues sur une même parcelle de terrain (8.1,8.2), de façon à fournir des informations de recommandation pour un traitement phytosanitaire et/ou pour un épandage d'engrais sur ladite parcelle de terrain (8.1,8.2).

12. Système (1) selon l'une quelconque des revendications 9 à 11, **caractérisé en ce que** les moyens d'identification de l'outil agricole (4.1,4.2,4.3) comprennent une balise radio-émettrice (3.1,3.2,3.3) installée sur ledit outil agricole.

13. Système (1) selon l'une quelconque des revendications 9 à 12, **caractérisé en ce que** les moyens de mesure d'une grandeur physique comprennent des moyens pour mesurer les vibrations réalisée en un point de l'engin motorisé (2.1,2.2,2.3,2.4) et/ou de l'outil agricole (4.1,4.2,4.3), et des moyens permettant de mesurer l'inclinaison ou l'orientation de l'outil par rapport au sol ou la trajectoire.

14. Système (1) selon l'une quelconque des revendications 9 à 13, **caractérisé en ce qu'**il comprend en outre des moyens (60,70) pour détecter la proximité d'un équipement d'intérêt (6,7), notamment d'une station de fourniture de carburant, d'une zone de remplissage ou d'une zone de déchargement.

15. Equipement portable (20.1,20.2,20.3,20.4) embarqué dans un engin motorisé (2.1,2.2,2.3,2.4) équipé d'un ou plusieurs outils agricoles interchangeables (4.1,4.2,4.3), prévu pour l'implémentation du procédé pour fournir des informations de traçabilité pour des productions végétales selon l'une quelconque des revendications 1 à 8, comprenant des moyens pour géolocaliser en temps réel ledit engin motorisé (2.1,2.2,2.3,2.4), des moyens pour recevoir des données d'identification du ou des outils agricoles (4.1,4.2,4.3) équipant ledit engin motorisé, des moyens pour recevoir des mesures d'au moins une grandeur physique représentative du comportement mécanique et/ou de la configuration spatiale dudit engin motorisé (2.1,2.2,2.3,2.4) et/ou dudit ou desdits outils agricoles (4.1,4.2,4.3), des moyens d'interface pour inviter l'opérateur à saisir des informations d'intérêt pour l'activité, et des moyens pour communiquer avec un site distant (10) de traitement d'informations et de génération d'informations de traçabilité.
